# DEMANDE DE BREVET EUROPEEN

(11) **EP 1 481 593 A1**
(43) Date de publication de la demande: **01.12.2004**
(21) Numéro de dépôt: 04291194.1
(22) Date de dépôt: 10.05.2004
(51) Int. Cl.: A23G 3/00

(54) **Comprimé de chewing-gum sans sucre et son procédé de fabrication.**

(30) Priorité: 27.05.2003 FR 0306406
(71) Demandeur: Roquette Frères, 62136 Lestrem (FR)
(72) Inventeur: Ribadeau-Dumas, Guillaume, 59237 Verlinghem (FR); Le Bihan, Grégory, 76170 La Frenaye (FR); Dauchy, Bruno, 62136 Lestrem (FR)
(74) Mandataire: Boulinguiez, Didier

(57) **Abrégé**

L'invention a pour objet un comprimé de chewing-gum sans sucre comprenant plus de 25% en poids de gomme de base et un édulcorant en poudre comprenant au moins 40%, et de préférence au moins 50% en poids de sorbitol poudre, ne se désagrégeant pas, ne se délitant et ne s'effritant pas au début de la mastication.

## Description

L'invention a pour objet un chewing-gum ou gomme à mâcher sous forme de comprimé.

Plus précisément, l'invention concerne un comprimé de chewing-gum sans sucre à base de sorbitol qui ne se désagrège pas, ne s'effrite pas et ne s'émiette pas au début de la mastication.

L'invention a également pour objet un procédé permettant de préparer de tels comprimés.

Les chewing-gums ou bubble-gums se présentent sous une grande variété de formes, par exemple sous forme de tablettes, de billes ou de dragées. Une nouvelle tendance vise depuis quelques années à proposer des chewing-gums qui se présentent sous forme de comprimés.

Les comprimés de chewing-gum obtenus par compression d'excipients en poudre sont généralement caractérisés par une texture dure et cassante, et se désagrègent lorsqu'ils sont croqués ce qui donne une sensation granuleuse en bouche.

Les comprimés de chewing-gum obtenus par compression de poudre présentent généralement un aspect très homogène qui peut être difficile à différencier d'un chewing-gum obtenu selon un autre procédé que la compression. Toutefois, ils présentent toujours une tranche verticale de taille plus ou moins importante, mais visible, ce qui n'est pas le cas des tablettes de chewing-gums obtenus par lamination d'une pâte, ou des coussinets ou billes de chewing-gums dragéifiés ou non.

Lors de la production de comprimés de chewing-gums, de nombreux problèmes peuvent apparaître, tels que par exemple le mauvais écoulement de la poudre de chewing-gum, le collage aux poinçons, le clivage des comprimés, la comprimabilité et l'écoulement de la poudre étant des critères essentiels pour le bon déroulement du procédé. Ces problèmes sont généralement résolus par optimisation de la poudre à comprimer et/ou par l'emploi d'auxiliaires technologiques.

Les compositions traditionnelles de chewing-gum sont difficiles à utiliser telles quelles pour fabriquer des comprimés principalement parce que le mélange des ingrédients de ces formules dans les pétrins à bras en Z, chauffés entre 50 et 80°C selon le procédé traditionnellement utilisé par les producteurs de chewing-gums ne conduit pas à la production d'une poudre requise pour la compression directe.

Il est donc nécessaire d'adapter les compositions et les procédés de fabrication traditionnels à cette nouvelle forme de confiserie.

Il a été proposé notamment dans le brevet US 4.000.321 de congeler la préparation de chewing-gum de manière à pouvoir aisément la broyer et la comprimer. Cette technique nécessite toutefois un équipement particulier autre que les presses traditionnelles.

Une autre méthode consiste à préparer des formules de chewing-gum de faible teneur en eau, en utilisant la technique de granulation. Cette technique est notamment décrite dans le brevet EP 151.344. Ainsi, il a été possible de préparer des comprimés de chewing-gum à l'aide de différents ingrédients et notamment de sucres compressibles.

Cependant, des comprimés de chewing-gums sans sucre, mettant en oeuvre un nombre limité d'ingrédients, obtenus de façon simple et économique et présentant des qualités organoleptiques satisfaisantes n'ont jamais pu être réalisés.

Le document WO 02/078459 décrit des comprimés de chewing-gum comprenant une gomme de base et un sucre ou un polyol, et ayant pour caractéristique de se désagréger, de se déliter ou de s'effriter au début de la mastication puis de se transformer en texture élastique plus tard au cours de la mastication.

Cette texture poudreuse, granuleuse, encore qualifiée de « crumbly » par l'homme du métier, résultant de la désagrégation, de l'effritement du comprimé de chewing-gum en début de mastication n'est pas forcément recherchée par le consommateur, qui souhaite les caractéristiques habituelles d'un chewing-gum sans les désagréments d'une sensation sableuse ou granuleuse en bouche.

Le document WO 03/011045 décrit des comprimés de chewing-gum sans sucre, préparés à partir d'un mélange hétérogène de particules de gomme de base de grosse granulométrie et d'excipients comprimables. Les comprimés obtenus ne sont cependant pas homogènes, et la poudre mise en oeuvre pour leur fabrication peut présenter un risque de démélange en raison de son hétérogénéité.

D'autres formules existent également sur le marché, mettant en oeuvre des excipients relativement onéreux. C'est le cas notamment des poudres de chewing-gum comprenant majoritairement de l'isomalt en tant qu'édulcorant, telles que les poudres commercialisées par CAFOSA Spa, sous l'appellation ALL IN GUM SF et ALL IN GUM SF+. Ces poudres contiennent environ 6 à 10% de sorbitol et 60 à 90% d'isomalt. D'autres comprimés à forte teneur en isomalt sont également proposés par SCHUSTER MARKETING sous l'appellation BLITZ. Ces comprimés contiennent environ 36% en poids d'isomalt et 23% de sorbitol.

On connaît également des compositions de gomme de base directement compressibles, commercialisées par la société SPI PHARMA sous l'appellation PHARMAGUM™S, qui comprennent environ 75% en poids de sorbitol et 25% en poids de gomme de base. Ces compositions conduisent à des comprimés de chewing-gum qui se désagrègent et se délitent au début de la mastication.

Fort de ce constat, et cherchant à améliorer l'état de la technique, la Demanderesse s'est attachée à fabriquer un comprimé de chewing-gum sans sucre, à base de polyols et essentiellement de sorbitol qui est le polyol en poudre le moins onéreux, et de gomme de base, d'arômes liquides ou en poudre, pouvant contenir des édulcorants intenses, un ou plusieurs lubrifiants alimentaires et un agent d'écoulement, ne présentant pas les inconvénients de l'art antérieur.

Et c'est après de nombreux essais qu'elle a eu le mérite de parvenir à ce but, en mettant au point une formule particulière et un procédé adapté pour l'obtention de comprimés de chewing-gum sans sucre essentiellement à base de sorbitol, qui ne se désagrègent pas et ne se délitent pas en début de mastication.

L'invention concerne donc en premier lieu un comprimé de chewing-gum sans sucre comprenant plus de 25% en poids de gomme de base et un édulcorant en poudre contenant au moins 40%, de préférence au moins 50% de sorbitol en poudre, ne se désagrégeant pas, ne se délitant et ne s'effritant pas au début de la mastication, contrairement aux chewing-gums décrits dans WO 02/78459.

L'édulcorant consiste en au moins 40%, de préférence au moins 50% en poids de sorbitol sous forme de poudre de fine granulométrie, associé à un ou plusieurs polyols en poudre de fine granulométrie choisis dans le groupe constitué par le sorbitol, le mannitol, le maltitol, le xylitol, l'érythritol, le lactitol, l'isomalt seuls ou en mélange entre eux.

On entend par fine granulométrie au sens de la présente invention un diamètre moyen de particules de l'ordre de 20 à 120 micromètres. Ces valeurs peuvent être déterminées au moyen d'un granulomètre LASER LS 130 de marque COULTER®, équipé d'une cellule optique de Fourier et d'un module phase sèche, par la détermination par diffraction LASER de la répartition volumique en taille des particules de polyol pulvérulent.

En ce qui concerne les proportions d'édulcorant dans le comprimé, on préfère des quantités de 50 à 75%, de préférence 60 à 74%, et encore plus préférentiellement 60 à 73% en poids. Selon une variante préférée de l'invention, l'édulcorant est présent à hauteur de 60 à 70% en poids dans le comprimé.

Selon une variante avantageuse de l'invention, l'édulcorant consiste en un mélange binaire ou ternaire de polyols en poudre comprenant majoritairement du sorbitol. On pourra avantageusement mettre en oeuvre un mélange de sorbitol avec du xylitol, du mannitol ou du maltitol.

De très bons résultats ont été obtenus avec un édulcorant comprenant un mélange de 80 à 90% en poids de sorbitol poudre et de 10% en poids de xylitol, de mannitol ou de maltitol en poudre.

On pourra à titre indicatif, utiliser des polyols de fine granulométrie tels que le NEOSORB®P100T, le XYLISORB®90, le MANNITOL 35, le MALTISORB®P35 commercialisés par la Demanderesse.

En ce qui concerne la gomme de base, on peut utiliser toute gomme de base disponible dans le commerce et adaptée à la préparation de chewing-gums par compression directe. A titre d'exemple on peut citer notamment la gomme de base commercialisée par CAFOSA GUM S/A sous l'appellation ARTICA-T.

La gomme de base sera présente dans le comprimé à une teneur de plus de 25% en poids, de préférence 25 à 50%, plus préférentiellement encore 26 à 40% et encore mieux 27 à 30% en poids.

Le comprimé de chewing-gum pourra en outre contenir au moins un composé choisi parmi les lubrifiants alimentaires tels que notamment le stéarate de magnésium, de calcium, l'acide stéarique, la carboxyméthyl cellulose, les agents d'écoulement comme par exemple la silice, les arômes, colorants, édulcorants intenses tels qu'aspartame, acésulfame K, alitame, néotame, sucralose, saccharine, néohespéridine DC, les actifs pharmaceutiques, minéraux, extraits de plantes, anti-oxydants, et fibres indigestibles telles que par exemple les oligosaccharides tels que les fructo oligosaccharides, les fibres indigestibles telles que le FIBERSOL® commercialisé par la société MATSUTANI, ou encore le NUTRIOSE®FB commercialisé par la Demanderesse. Ces excipients pourront être compris directement dans l'édulcorant en poudre, ou ajoutés séparément.

La Demanderesse a par ailleurs confirmé l'importance d'utiliser des ingrédients en poudre pour réaliser des comprimés selon l'invention en observant que dès lors que l'on met en oeuvre plus de 10% de sirop de polyols (maltitol, sorbitol, glycérine seuls ou en mélange entre eux) on ne parvient pas à obtenir des comprimés de chewing-gums selon l'invention, c'est à dire ne se désagrégeant pas et ne s'effritant pas en début de mastication. Les comprimés selon l'invention contiendront donc de préférence moins de 10% en poids de sirop de polyols, et en particulier de sirop de sorbitol, maltitol et/ou glycérine.

L'invention concerne également une poudre de chewing-gum permettant d'obtenir par compression les comprimés de chewing-gum selon l'invention.

Plus précisément, ladite poudre de chewing-gum comprenant plus de 25% en poids de gomme de base et un édulcorant en poudre, est caractérisée en ce que ledit édulcorant comprend au moins 40% et de préférence au moins 50% de sorbitol poudre. Selon une variante avantageuse, ladite poudre comprend plus de 25%, de préférence 25 à 50%, plus préférentiellement encore 26 à 40% et encore mieux 27 à 30% en poids de gomme de base, et 50 à 75%, de préférence 60 à 74%, et mieux 60 à 73% en poids d'un édulcorant en poudre comprenant au moins 40%, de préférence 50% de sorbitol.

Selon une variante préférée de l'invention; ladite poudre comprend 27 à 30% en poids de gomme de base, et 60 à 73% en poids d'un édulcorant comprenant du sorbitol seul, ou en mélange avec 10% d'un polyol choisi parmi le mannitol, le xylitol, le maltitol ou l'isomalt, ainsi qu'un lubrifiant, au moins un arôme, au moins un édulcorant intense et de la silice.

L'invention concerne en second lieu un procédé de fabrication d'un comprimé de chewing-gum sans sucre comprenant plus de 25% en poids de gomme de base, un édulcorant en poudre comprenant au moins 40% et de préférence au moins 50% en poids de sorbitol poudre, ledit comprimé ne se désagrégeant et ne s'effritant pas au début de la mastication, caractérisé en ce qu'il comprend les étapes de :
- mélange de la gomme de base fondue et de l'édulcorant en poudre jusqu'à obtention d'une poudre fine,
- refroidissement de la poudre obtenue et compression de la poudre refroidie.

La gomme de base est fondue de manière à la ramollir par tout moyen connu de l'homme du métier. On pourra à titre d'exemple utiliser un four à micro-ondes.

Le mélange d'édulcorant en poudre et de gomme de base est réalisé par exemple dans un mélangeur à double enveloppe, jusqu'à ce qu'on obtienne une poudre fine.

Selon une variante préférée du procédé selon l'invention, le mélangeur est préchauffé à une température d'environ 80°C. Dans ce cas, il n'est pas nécessaire de fondre préalablement la gomme de base, qui peut être utilisée directement sous forme de pellets.

Le mélange peut être ensuite broyé, si nécessaire, c'est à dire si des agglomérats sont observés dans la poudre, par tout moyen connu de l'homme du métier, puis éventuellement tamisé de manière à éliminer les particules trop fines qui peuvent gêner l'écoulement de la poudre, et/ou les particules trop grosses qui peuvent gêner le remplissage de la matrice de compression. A titre d'exemple, on préférera que la poudre à comprimer présente une granulométrie comprise entre 50 et 2000 micromètres, de préférence entre 100 et 1000 micromètres. Cette granulométrie est déterminée par tamisages successifs sur tamis rotatifs équipés d'une toile métallique.

Le mélange, éventuellement broyé et tamisé peut être ensuite additionné de tout excipient tel que par exemple les arômes, édulcorants intenses, lubrifiants, fibres indigestibles, actifs pharmaceutiques, agents d'écoulement.

Ce mélange est ensuite refroidi par tout moyen connu de l'homme du métier. On refroidit de préférence le mélange à une température finale inférieure à 25°C, de préférence inférieure à 20°C et encore plus préférentiellement de l'ordre de 10°C.

Ce mélange refroidi peut ensuite être directement comprimé sur presse alternative par exemple, tout matériel de compression directe pouvant être utilisé pour réaliser l'invention. De préférence, on utilisera une presse munie de poinçons concaves.

Les comprimés de chewing-gum selon l'invention peuvent en outre être dragéifiés par toute technique à la disposition de l'homme du métier. On pourra se référer aux méthodes connues mettant en oeuvre des sucres ou des polyols, comme par exemple les procédés de dragéification décrits dans les brevets EP 201.412 B1, EP 625.311 B1, EP 774.210 B1 dont la Demanderesse est titulaire, cette liste n'étant nullement limitative.

L'invention sera mieux comprise à la lecture des exemples qui suivent, qui se veulent uniquement illustratifs et non limitatifs.

### Exemple 1 : préparation d'un comprimé de chewing-gum sans sucre selon l'invention.

### a. MELANGE SORBITOL-MANNITOL

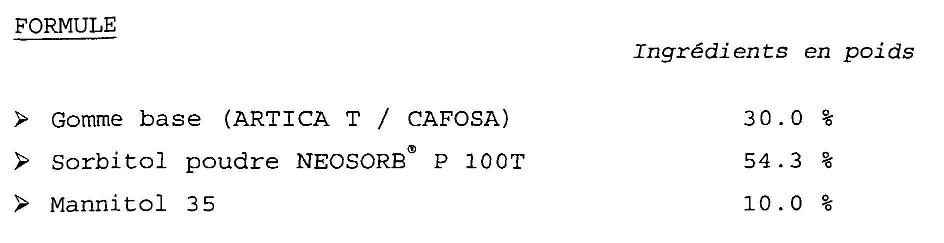

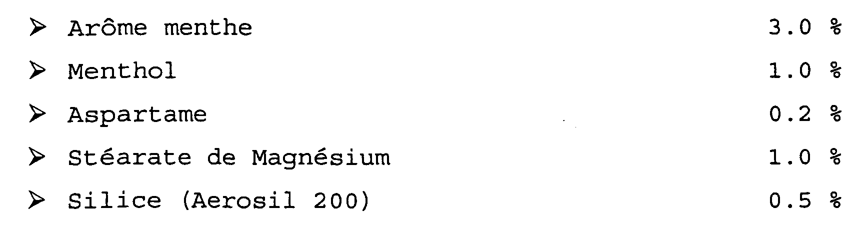

### MODE OPERATOIRE

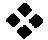 Introduire la gomme base sous forme de pellets, le sorbitol poudre et le mannitol dans un mélangeur à bras en Z préchauffé à 85°C.
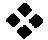 Mélanger environ 5 minutes, jusqu'à obtention d'une poudre fine,
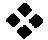 Si nécessaire, tamiser pour éliminer les agglomérats.
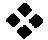 Refroidir la poudre,
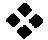 Ajouter les arômes, l'aspartame, le stéarate de magnésium et la silice et comprimer sur presse alternative FROGERAIS, munie de poinçons concaves de diamètre 13 mm.

### b. MELANGE SORBITOL-XYLITOL

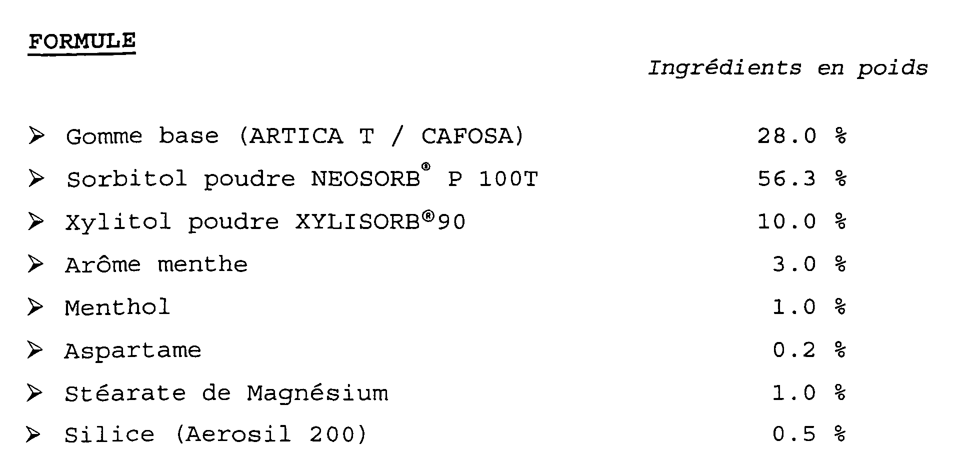

MODE OPERATOIRE : identique à a) en remplaçant le mannitol par le xylitol.

### c. MELANGE SORBITOL-MALTITOL

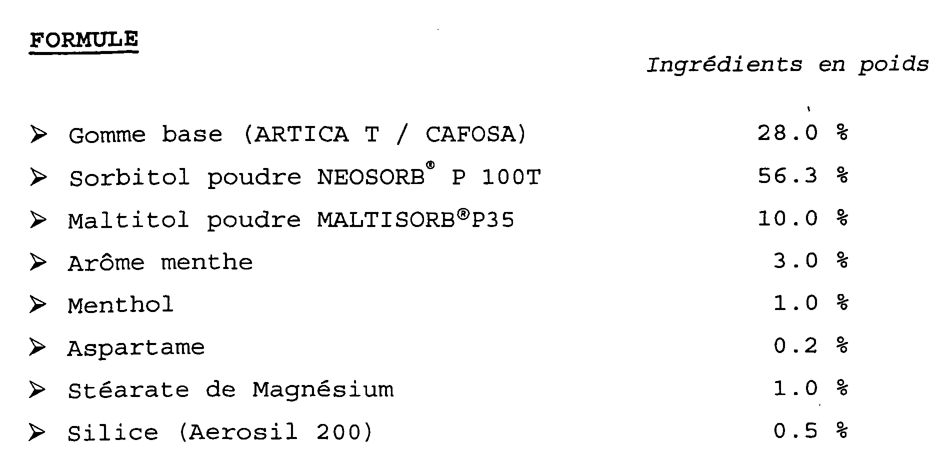

MODE OPERATOIRE : identique à a) en remplaçant le mannitol par le maltitol.

Les comprimés de chewing-gum selon a, b ou c ne se désagrègent pas, ne se délitent pas, ne s'effritent pas au début de la mastication, après quoi on obtient la texture élastique habituelle d'un chewing-gum classique.

### d. SORBITOL SEUL

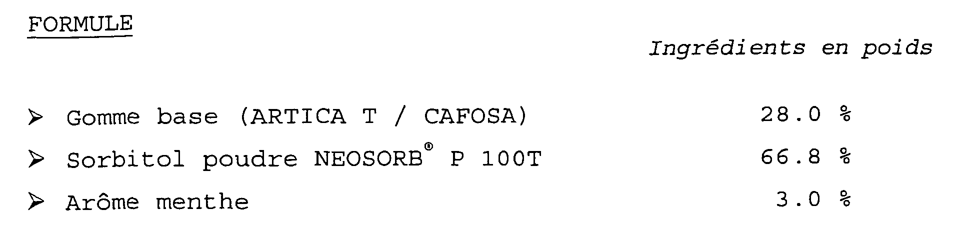

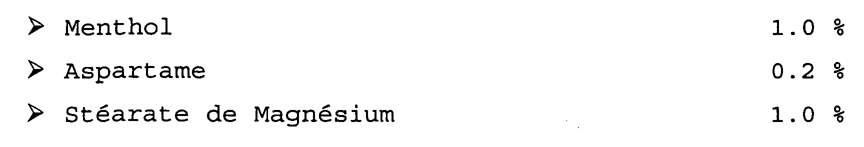

### MODE OPERATOIRE

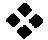 Introduire la gomme base préalablement fondue (micro-ondes 5 min/1000W) et le sorbitol poudre dans un mélangeur à bras en Z.
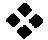 Mélanger environ 25 à 60 minutes, jusqu'à obtention d'une poudre fine,
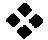 Si nécessaire, tamiser pour éliminer les agglomérats.
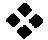 Ajouter les arômes, l'aspartame, le stéarate de magnésium et la silice et comprimer sur presse alternative FROGERAIS, munie de poinçons plats de diamètre 10 mm.

### e. MELANGE SORBITOL ET FIBRE INDIGESTIBLE

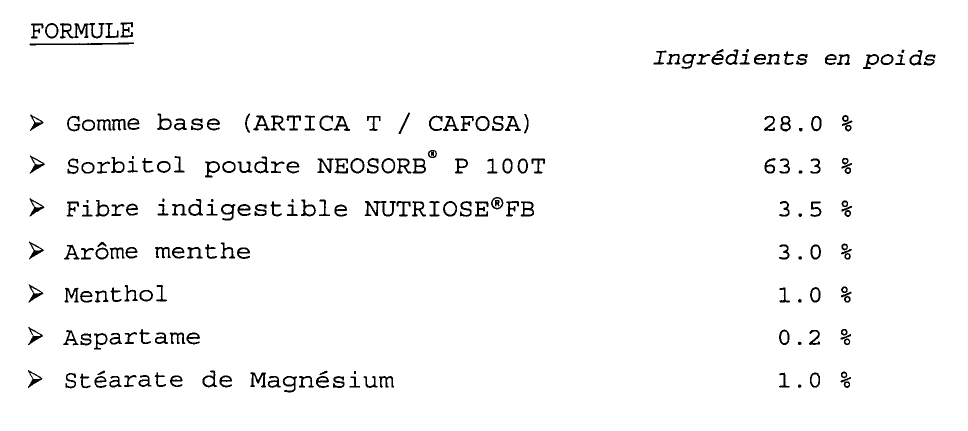

MODE OPERATOIRE : identique à d).
Les comprimés selon d) et e) ne se désagrègent pas et ne s'effritent pas au début de la mastication. On n'observe aucun problème de collage au cours de la compression.

### Exemple 2 : préparation de comprimés de chewing-gums sans sucre selon l'invention et comparaison avec une composition de l'art antérieur.

Des comprimés de chewing-gums selon l'invention, comprenant un édulcorant renfermant au moins 40% de sorbitol de fine granulométrie ont été réalisés selon les formules suivantes 1 à 7. Des comprimés ont été réalisés dans les mêmes conditions avec une poudre prête à l'emploi dont l'édulcorant est constitué principalement d'isomalt. Les comprimés ont ensuite été soumis à un panel de dégustation, auquel on a demandé d'évaluer la texture des comprimés en bouche, et de repérer la formule préférée.

| | **formule 1** | **formule 2** | **formule 3** | **formule 4** | **formule 5** | **formule 6** | **formule 7** |
|---|---|---|---|---|---|---|---|
| NEOSORB® P60W | 60.9 | 59.4 | 57.9 | 59.9 | 55.9 | 56.4 | 50.9 |
| Artica T | 30.0 | 30.0 | 33.0 | 30.0 | 30.0 | 33.0 | 30.0 |
| Xylitol 90 | - | - | - | - | 5.0 | - | 10.0 |
| LYCASIN® 80/55 HDS | | 1.5 - | | - | - | 1.5 | - |
| Glycérine | - | - | - | 1.0 | - | - | - |
| Stéarate de calcium | 1.5 | 1.5 | 1.5 | 1.5 | 1.5 | 1.5 | 1.5 |
| Aspartame Taste Tech | 1.0 | 1.0 | 1.0 | 1.0 | 1.0 | 1.0 | 1.0 |
| Acesulfame K | 0.3 | 0.3 | 0.3 | 0.3 | 0.3 | 0.3 | 0.3 |
| Arôme peppermint Firmenich | 2.0 | 2.0 | 2.0 | 2.0 | 2.0 | 2.0 | 2.0 |
| Menthol IFF | 2.0 | 2.0 | 2.0 | 2.0 | 2.0 | 2.0 | 2.0 |
| Peppermint AM Todd | 1.0 | 1.0 | 1.0 | 1.0 | 1.0 | 1.0 | 1.0 |
| "Crystal White" AM Todd | 0.8 | 0.8 | 0.8 | 0.8 | 0.8 | 0.8 | 0.8 |
| Silice Sypernat 50S | 0.5 | 0.5 | 0.5 | 0.5 | 0.5 | 0.5 | 0.5 |
| Total | **100.0** | **100.0** | **100.0** | **100.0** | **100.0** | **100.0** | **100.0** |

### Résultats :

Toutes les poudres testées ont un écoulement satisfaisant, l'ajout de silice permettant de maintenir la fluidité de la poudre après ajout de l'arôme liquide.

Après dégustation, tous les comprimés selon l'invention présentent une texture de chewing-gum lié en bouche, comme un chewing-gum classique. Ces comprimés ont été préférés par le panel de dégustation, par rapport au comprimé base isomalt, qui a été jugé moins satisfaisant en raison d'une texture s'effritant en bouche, et plus dure que les comprimés selon l'invention. Aucune préférence n'a été formulée pour ce dernier, alors que les comprimés selon l'invention ont été préférés de manière discriminante, sans différences significatives entre eux.

## Revendications

1. Comprimé de chewing-gum sans sucre comprenant plus de 25% en poids de gomme de base et un édulcorant en poudre comprenant au moins 40%, et de préférence au moins 50% en poids de sorbitol poudre, ne se désagrégeant pas, ne se délitant et ne s'effritant pas au début de la mastication.

2. Comprimé selon la revendication 1, **caractérisé en ce que** l'édulcorant en poudre comprend, outre le sorbitol, un ou plusieurs polyols en poudre de fine granulométrie choisis dans le groupe constitué par le sorbitol, le mannitol, le maltitol, le xylitol, l'érythritol, le lactitol, l'isomalt seuls ou en mélange entre eux.

3. Comprimé selon l'une ou l'autre des revendications 1 et 2, **caractérisé en ce que** l'édulcorant consiste en un mélange de deux polyols choisi parmi le sorbitol et le xylitol, le sorbitol et le mannitol ou le sorbitol et le maltitol.

4. Comprimé selon l'une quelconque des revendications 1 à 3, **caractérisé en ce que** le dit édulcorant présente une granulométrie moyenne comprise entre 20 et 120 micromètres.

5. Comprimé selon l'une quelconque des revendications 1 à 4, **caractérisé en ce qu'**il comprend en outre au moins un composé choisi parmi un lubrifiant, un arôme, un colorant, un actif pharmaceutique, une fibre indigestible.

6. Comprimé selon l'une quelconque des revendications 1 à 5, **caractérisé en ce qu'**il comprend moins de 10% en poids de sirop de polyols, et de préférence moins de 10% en poids de sirop de sorbitol, maltitol et/ou glycérine.

7. Comprimé selon l'une quelconque des revendications 1 à 6, **caractérisé en ce qu'**il comprend 25 à 50%, de préférence 26 à 40% en poids de gomme base, et 50 à 75%, de préférence 60 à 74% et encore plus préférentiellement 60 à 73% en poids d'édulcorant.

8. Procédé de fabrication d'un comprimé de chewing-gum selon l'une quelconque des revendications 1 à 7, **caractérisé en ce qu'**il comprend les étapes de :
- mélange de la gomme base fondue et de l'édulcorant en poudre jusqu'à obtention d'une poudre fine,
- refroidissement de la poudre,
- compression de la poudre refroidie.

9. Procédé selon la revendication 8, **caractérisé en ce que** le mélange de la gomme de base non fondue et de l'édulcorant en poudre est effectué dans un pétrin préchauffé à plus de 70°C, et de préférence à plus de 80°C.

10. Poudre de chewing-gum pour compression comprenant plus de 25% en poids de gomme de base et un édulcorant en poudre comprenant au moins 40% et de préférence au moins 50% en poids de sorbitol poudre, permettant d'obtenir des comprimés de chewing-gum ne se désagrégeant pas, ne se délitant et ne s'effritant pas au début de la mastication.
